Europäisches Patentamt

European Patent Office

Office européen des brevets

(11) Veröffentlichungsnummer: **0 299 179 B1**

## EUROPÄISCHE PATENTSCHRIFT

(45) Veröffentlichungstag der Patentschrift: **02.12.92**

(51) Int. Cl.5: **F02M 63/02**, F02D 41/38, //F02M41/12

(21) Anmeldenummer: **88108398.4**

(22) Anmeldetag: **26.05.88**

(54) **Abschaltvorrichtung für eine Diesel-Brennkraftmaschine.**

(30) Priorität: **23.06.87 DE 3720695**

(43) Veröffentlichungstag der Anmeldung:
**18.01.89 Patentblatt 89/03**

(45) Bekanntmachung des Hinweises auf die
Patenterteilung:
**02.12.92 Patentblatt 92/49**

(84) Benannte Vertragsstaaten:
**DE FR GB**

(56) Entgegenhaltungen:
**DE-A- 2 845 139**
**DE-A- 2 945 484**
**DE-A- 3 122 250**
**DE-B- 1 913 808**
**DE-B- 1 962 573**

**Automotive Handbook, Robert Bosch GmbH,
1st English Edition 1976, Seiten 288-293**

(73) Patentinhaber: **AUDI AG
Auto-Union-Strasse 1 Postfach 220
W-8070 Ingolstadt(DE)**

(72) Erfinder: **Bauder, Richard, Dipl.-Ing.
Fellbacher Weg 12
W-7107 Neckarsulm(DE)**

(74) Vertreter: **Speidel, Eberhardt
Postfach 1320 Waldpromenade 26
W-8035 Gauting(DE)**

EP 0 299 179 B1

## Beschreibung

Die Erfindung bezieht sich auf eine Vorrichtung für eine Diesel-Brennkraftmaschine gemäß dem Oberbegriff des Anspruchs 1.

Es sind Schaltungen für elektronisch geregelte Diesel-Brennkraftmaschinen bekannt geworden, mit denen verhindert wird, daß die Drehzahl einen bestimmten Grenzwert übersteigt. Bei einer Störung der elektronischen Endabregelung könnte sich die Drehzahl ständig weiter erhöhen, bis es zur mechanischen Zerstörung kommt. Daher wird meist eine zusätzliche Schutzschaltung vorgesehen, die ein Überdrehen der Brennkraftmaschine verhindert, wenn ein Defekt beispielsweise im elektronischen Regler auftritt. Eine derartige Schaltung ist Gegenstand der DE-AS 19 62 573.

Bei Diesel-Brennkraftmaschinen muß zum Starten eine größere Kraftstoffmenge eingespritzt werden, die über dem Vollastmengenbereich liegt. Bei elektronisch geregelten Diesel-Brennkraftmaschinen, die zum Antrieb eines Kraftfahrzeuges dienen, kann durch einen Fehler in der Elektronik das Mengenstellwerk plötzlich auf Startübermenge regeln, was zu einer Beschleunigung des Fahrzeuges führt. Die bekannten Überdrehzahl-Schutzeinrichtungen sind in diesem Fall wirkungslos, da sie erst bei Erreichen der Überdrehzahl wirksam werden.

Der Erfindung liegt die Aufgabe zugrunde, eine Vorrichtung zu schaffen, welche derartige Zustände ausschließt.

Gelöst wird die gestellte Aufgabe dadurch, daß das Mengenstellwerk jenseits des zulässigen Betriebsbereiches eine Endstellung aufweist, in der durch Erreichen der Endstellung eine Einrichtung zur Unterbrechung der Kraftstoffzufuhr zu der Einspritzpumpe aktiviert wird.

Die erfindungsgemäße Vorrichtung arbeitet somit nicht drehzahlabhängig, sondern in Abhängigkeit von der Stellung des Mengenstellwerkes, so daß gewährleistet ist, daß die Brennkraftmaschine abgeschaltet wird, wenn das Mengenstellwerk in eine Stellung gelangt, die über der Startmenge liegt.

Die Unterbrechung der Kraftstoffzufuhr kann mittels eines Schalters erfolgen, der in der Endstellung des Mengenstellwerkes betätigt wird. Dieser Schalter kann bei Vorhandensein eines elektrischen Abschaltventils (ELAB) zur Unterbrechung der Kraftstoffzufuhr zur Einspritzpumpe dieses Abschaltventil aktivieren. Wenn das Mengenstellwerk einen elektronisch in Abhängigkeit von Betriebsparametern geregelten Drehmagneten enthält, kann mit dem genannten Schalter die Wicklung des Drehmagneten umgepolt werden, so daß das Mengenstellwerk auf Nullförderung zurückgedreht wird. Dieses Zurückdrehen erfolgt äußerst schnell, da in der Endstellung des Mengenstellwerkes eine hohe Spannung an der Wicklung des Drehmagneten anliegt. Alternativ kann eine in der Endstellung des Mengenstellwerkes auslösbare mechanische Einrichtung vorgesehen sein, welche das Mengenstellwerk in seine Null-Position zurückführt.

Ein Ausführungsbeispiel der Erfindung wird in folgenden unter Bezugnahme auf die Zeichnungen beschrieben. Es zeigt:

Fig. 1 einen Längsschnitt einer Verteiler-Einspritzpumpe,

Fig. 2 ein Schaltbild des elektrischen Abschaltventils.

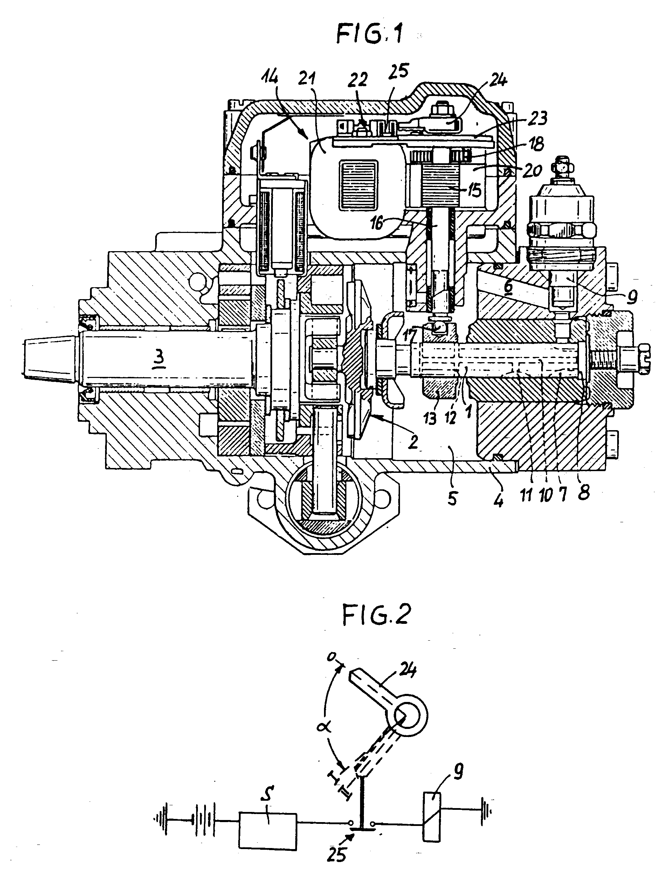

Die in Fig. 1 gezeigte Verteiler-Einspritzpumpe weist einen Pumpenkolben 1 auf, der von einer Nockenscheibe 2, die von einer Welle 3 angetrieben wird, in eine hin- und hergehende und gleichzeitig rotierende Bewegung versetzt wird. Das Gehäuse 4 der Pumpe umschließt einen Druckraum 5, der über eine Druckleitung 6 und in der Umfangsfläche des Kolbens 1 angeordnete Längsnuten 7 mit einem Pumpenraum 8 in Verbindung steht. In der Druckleitung 6 ist ein elektrisches Kraftstoff-Absperrventil 9 (ELAB) angeordnet, das im stromlosen Zustand geschlossen ist und dadurch bei Stromausfall den Druckkanal 6 absperrt. Während des Förderhubes des Kolbens 1 gelangt der Kraftstoff über eine Längsbohrung 10 zu einer Verteilernut 11, die bei jedem Förderhub mit einer nicht gezeigten Einspritzleitung in Verbindung kommt. Die Längsbohrung 10 steht mit einer Querbohrung 12 in Verbindung, die nach einem bestimmten Kolbenhub von einem Ringschieber 13 freigegeben wird und den Pumpenraum 8 mit dem Druckraum 5 verbindet, wodurch der Einspritzvorgang beendet wird. Der Ringschieber 13 ist durch einen Drehmagneten 14 verschiebbar, um die Einspritzmenge zu verändern. Der Drehmagnet 14 weist einen Kern 20 mit einer Spule 21 sowie einen Anker 15 auf, der an einer Welle 16 angebracht ist, die mittels eines exzentrischen Mitnehmerarmes 17 mit dem Ringschieber 13 gekoppelt ist, so daß eine Drehung des Ankers 15 eine Verschiebung des Ringschiebers 13 zur Folge hat. An der Welle 16 greift eine spiralförmige Rückstellfeder 18 an. Der Drehmagnet 14 wird von einem elektronischen Steuergerät S (Fig. 2) geregelt, das auch das Abschaltventil 9 mit Strom versorgt. Zur Drehwinkelerfassung des aus dem Drehmagneten 14, der Welle 16 und dem Ringschieber 13 bestehende Mengenstellwerkes sitzt auf dem Ende der Welle 16 der Arm 24 eines Potentiometers 22, dessen Grundplatte 23 einen Endschalter 25 trägt, welcher in der Endstellung des Dreh-Magneten 14 durch den Potentiometerarm 24 betätigt wird und die Stromzuführung zu dem Abschaltventil 9 unterbricht.

In Fig. 2 ist schematisch die Schaltung für das Abschaltventil 9 dargestellt. Der Potentiometerarm 24 ist in ausgezogenen Linien in der Nullstellung = Fördermenge 0 dargestellt. Der zulässige Betriebsbereich ist durch den Schwenkwinkel $\alpha$ gekennzeichnet. Der Endpunkt dieses Bereiches ist mit I bezeichnet. Innerhalb des Bereiches $\alpha$ wird die einzuspritzende Kraftstoffmenge in üblicher Weise entsprechend den Betriebsparametern geregelt, wobei zum Starten der Brennkraftmaschine eine größere Menge eingespritzt wird, bei der der Potentiometerarm 24 in die Stellung I gelangt. Bei den üblichen Verteiler-Einspritzpumpen endet in dieser Stellung I der Verstellweg des Mengenstellwerkes. Wenn im Normalbetrieb durch einen Fehler in der Elektronik oder durch Bruch der Rückstellfeder 18 das Mengenstellwerk plötzlich bis zur Stellung I verdreht wird, kann dies zu einer Beschleunigung des Kraftfahrzeuges führen, wenn die Brennkraftmaschine zum Antrieb eines solchen vorgesehen ist. Um dies zu vermeiden, ist jenseits des zulässigen Betriebsbereiches $\alpha$ für das Mengenstellwerk eine Vollmengen-Endstellung II vorgesehen, in welcher der Potentiometerarm 24 den Endschalter 25 betätigt, der das elektrische Abschaltventil 9 stromlos macht und damit die Kraftstoffzufuhr unterbindet, womit die Brennkraftmaschine sofort stehen bleibt. Dieser Zustand ist in Fig. 2 dargestellt.

In Abwandlung des dargestellten Ausführungsbeispiels kann der Endschalter 25 als Umschalter ausgebildet sein, der in der Endstellung des Potentiometerarms 24 die Wicklung der Spule 21 umpolt, so daß der Anker 15 sehr schnell in seine Ausgangsstellung zurückgedreht wird, die der Nullförderung der Einspritzpumpe entspricht. Schließlich könnte der Endschalter 25 auch in der Leitung zu der Spule 21 angeordnet sein, um diese Leitung zu unterbrechen, wenn der Potentiometerarm 24 in seine Vollmengen-Endstellung II gelangt. Die Rückholfeder 18 führt dann die Welle 16 in ihre Ausgangsstellung zurück. In jedem Fall ist der Endschalter 25 nach Art eines Kippschalters ausgebildet, der nach Betätigung durch den Potentiometerarm 24 in seiner Offenstellung verbleibt, auch wenn keine Kraft mehr auf ihn wirkt.

**Patentansprüche**

1. Vorrichtung für eine Diesel-Brennkraftmaschine mit einer Einspritzpumpe, der ein elektronisch geregeltes Mengenstellwerk zugeordnet ist, das einen Regelschieber der Einspritzpumpe betätigt,
   **dadurch gekennzeichnet,**
   daß das Mengenstellwerk (14 - 21) jenseits des zulässigen Betriebsbereiches ($\alpha$) eine Endstellung (II) aufweist, in der durch Erreichen der Endstellung eine Einrichtung (9) zur Unterbrechung der Kraftstoffzufuhr zu der Einspritzpumpe aktiviert wird.

2. Vorrichtung nach Anspruch 1, wobei ein elektrisches Abschaltventil zur Unterbrechung der Kraftstoffzufuhr zu der Einspritzpumpe vorgesehen ist, gekennzeichnet durch einen Schalter (25), der in der Endstellung (II) des Mengenstellwerkes betätigbar ist und das elektrische Abschaltventil (9) aktiviert.

3. Vorrichtung nach Anspruch 1, wobei das Mengenstellwerk einen elektronisch geregelten Drehmagneten aufweist, gekennzeichnet durch einen Schalter, der in der Endstellung (II) des Mengenstellwerkes betätigbar ist und den Drehmagneten (Spule 21) umpolt.

4. Vorrichtung nach Anspruch 1, gekennzeichnet durch eine in der Endstellung (II) des Mengenstellwerkes auslösbare mechanische Einrichtung zum Zurückführen des Mengenstellwerkes in seine Nullposition.

**Claims**

1. Device for a diesel engine with an injection pump with which an electronically controlled fuel feed control mechanism is associated, which operates a control rod of the injection pump, characterized in that said fuel feed control mechanism (14-21) has beyond the allowable operating range (d), an end position (II) in which, by arriving at the end position, a system (9) for the interruption of the feeding of fuel to the injection pump is activated.

2. Device according to claim 1, wherein an electrical shutoff valve is provided for interrupting the feed of fuel to the injection pump, characterized by a switch (25) which is actuable in the end position (II) of the fuel feed control mechanism and activates the electrical shutoff valve (9).

3. Device according to claim 1, wherein the fuel feed control mechanism has an electronically controlled rotary magnet, characterized by a switch which can be actuated in the end position (II) of the fuel feed control mechanism and which reverses the polarity of the rotary magnet (coil 21).

4. Device according to claim 1, characterized by a mechanical system for returning the fuel feed control mechanism to its null position, said mechanical system being actuable in the end position (II) of the fuel feed control mechanism.

**Revendications**

1. Dispositif pour un moteur Diesel avec une pompe d'injection à laquelle est associé un régulateur de débit électronique qui actionne un tiroir de réglace de la pompe d'injection, **caractérisé en ce** que la régulateur de débit (14 à 21) comporte au-delà de la plage de fonctionnement ($\alpha$) admissible une position de fin de course (II) dont l'atteinte provoque l'activation d'un dispositif (9) pour l'interruption de l'amenée de carburant vers la pompe d'injection.

2. Dispositif selon la revendication 1 avec une soupape d'arrêt électrique pour l'interruption de l'amenée de carburant vers la pompe d'injection, caractérisé en ce qu'il comprend un interrupteur (25) qui peut être actionné dans la position de fin de course (II) du régulateur de débit et active la soupape d'arrêt électrique (9).

3. Dispositif selon la revendication 1, le régulateur de débit comprenant un aimant tournant à réglage électronique, caractérisé en ce qu'il est pourvu d'un interrupteur qui peut être actionné dans la position de fin de course (II) du régulateur de débit et inverse la polarité de l'aimant tournant (bobine 21).

4. Dispositif selon la revendication 1, caractérisé en ce qu'il comprend un dispositif mécanique pour ramener le régulateur de débit dans sa position zéro, qui peut être déclenché dans la position de fin de course (II) dudit régulateur de débit.

# FIG.1

# FIG.2